# EUROPÄISCHE PATENTANMELDUNG

(11) **EP 2 384 886 A1**
(43) Veröffentlichungstag der Anmeldung: **09.11.2011**
(21) Anmeldenummer: 11001558.3
(22) Anmeldetag: 25.02.2011
(51) Int. Cl.: B32B 27/10, B32B 27/30, B65D 3/04, B65D 3/14, B65D 3/22

(54) **Getränkedose, die weitgehend aus zellstoffhaltigem Material besteht und eine lebensmittelverträgliche Barriereschicht aufweist, für unter Überdruck stehende Getränke**

(30) Priorität: 26.02.2010 DE 102010000562; 05.10.2010 DE 102010037965
(71) Anmelder: Keienburg, Günter, 40667 Meerbusch (DE)
(72) Erfinder: Keienburg, Günter, 40667 Meerbusch (DE)
(74) Vertreter: Sroka, Peter-Christian

(57) **Zusammenfassung**

Eine Getränkedose für unter Überdruck stehende, insbesondere Kohlensäure enthaltende Getränke mit einem durch Boden- und Deckelelemente verschlossenen Dosenmantel, der aus mindestens einem parallel gewickelten Laminat aus zellstoffhaltigem Material, vorzugsweise Karton, und einer im Bereich der Innenmantelfläche angeordneten Mehrschichtfolie als Barriere- bzw. Sperrschicht (14) besteht, ist dadurch gekennzeichnet, dass die Mehrschichtfolie (III) eine Gesamtdicke zwischen 50 µm und 120 µm, vorzugsweise zwischen 80 und 100 µm, hat, dass der Dickenanteil der Schicht (14), bezogen auf die Gesamtdicke der Mehrschichtfolie (III) zwischen 5 % und 15 %, vorzugsweise zwischen 8 % und 12 %, liegt, und dass vorzugsweise mindestens eine Metallfolie in des Dosenmantels integriert ist.

## Beschreibung

Die Erfindung betrifft eine Getränkedose gemäß dem Oberbegriff des Anspruchs 1 für unter Überdruck stehende, insbesondere Kohlensäure enthaltende Getränke mit einem durch Boden- und Deckelelemente verschlossenen Dosenmantel, der mindestens eine parallel gewickelte Lage aus zellstofflzaltigem Material, vorzugsweise Karton, und mindestens eine flüssigkeitsdichte, lebensmittelverträgliche Sperrschicht oder Barriereschicht aufweist.

Derartige Getränkedosen sind bekannt und beispielsweise beschrieben in US 2004/0052987 A1, WO 03/006237, JP 2005-239230 A und EP 08 013 126.

Es hat sich herausgestellt, dass die dem Stand der Technik entsprechenden Getränkedosen keine ausreichend hohe Sperr- oder Barrierewirkung gegenüber Wasser, Wasserdampf, Sauerstoff und Kohlendioxid haben und auch insbesondere im Bereich ihrer Mantelfläche nicht in der Lage sind, über einen langen Zeitraum den auf sie wirkenden Innendrücken standzuhalten, wie sie insbesondere bei Bierdosen auftreten.

Der Erfindung liegt die Aufgabe zugrunde, eine Getränkedose gemäß dem Oberbegriff des Patentanspruchs 1 zu schaffen, der eine hohe Barrierewirkung gegenüber Wasser, Wasserdampf, Sauerstoff und Kohlendioxid aufweist und in der Lage ist, insbesondere im Bereich der Mantelfläche auf ihn einwirkenden hohen Druckkräften zu widerstehen.

Zur Lösung dieser Aufgabe dient eine Getränkedose mit den Merkmalen aus dem kennzeichnenden Teil des Patentanspruchs 1.

Es hat sich gezeigt, dass erst mit den erfindungsgemäß vorgeschlagenen Dicken und Grammaturen der einzelnen Lagen eine befriedigende Lösung der anstehenden Probleme, soweit es die Funktionsfähigkeit einer insbesondere für Bier geeigneten Getränkedose betrifft, erreicht wird.

Vorzugsweise ist mindestens eine Metallfolie in den Dosenmantel integriert.

Weitere bevorzugte Ausführungsformen der Getränkedose sind in den Unteransprüchen behandelt.

Die Erfindung wird im Folgenden anhand der Zeichnung näher beschrieben:
Figur 1 zeigt eine perspektivische Ansicht einer Getränkedose in auseinandergezogener Darstellung;
Figur 2 zeigt in vereinfachter Darstellung einen Querschnitt des insbesondere für den Dosenmantel verwendeten Laminats;
Figur 3 zeigt den Schichtenaufbau einer dem Doseninnenraum zugewandten, eine Barriereschicht bildenden Mehrschichtfolie (Multilayer-Schicht);
Figur 4 zeigt in vereinfachter perspektivischer Darstellung und in stark vergrößertem Maßstab den Schichtenaufbau des insbesondere für den Dosenmantel verwendeten Laminats;

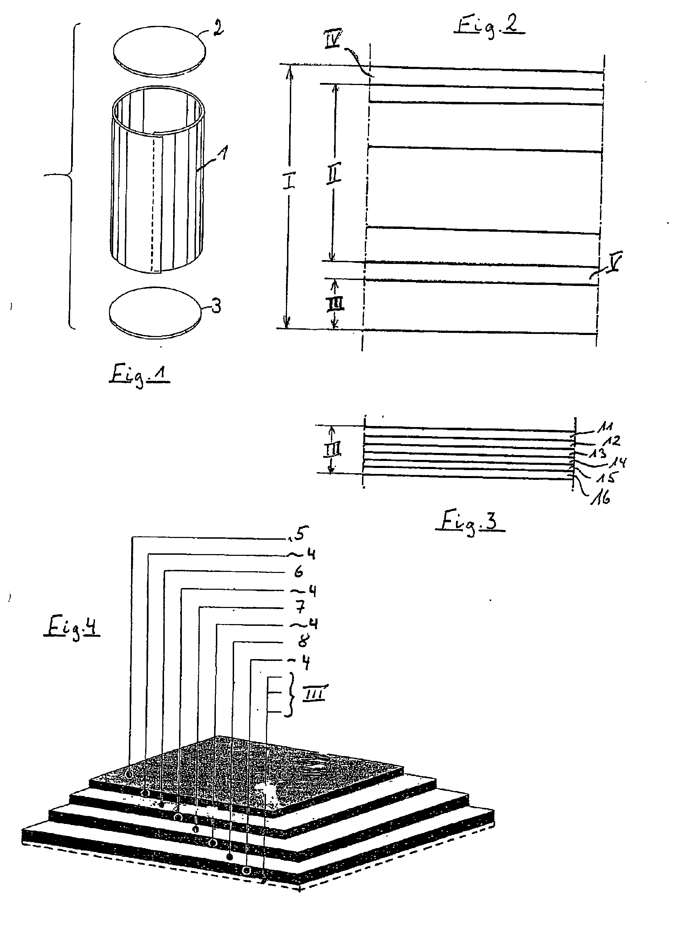

Figur 1 zeigt eine Getränkedose 1, die aus mindestens einem parallel gewickelten Laminat aus zellstoffhaltigem Material, vorzugsweise Karton, einem Deckel 2 und einem Boden 3 zusammensetzbar ist, wobei der Deckel 2 und der Boden 3 vorzugsweise aus dem gleichen Laminatmaterial bestehen wie der Dosenmantel 1.

Das Laminat I enthält eine aus mehreren Kartonlagen bestehenden Kartonschicht II, eine eine Sperr- und Barriereschicht bildende Mehrschichtfolie III, eine äußere PE- bzw. PE/PA- bzw. LDPE-Beschichtung IV und eine Klebeschicht V.

Die äußere Beschichtung IV, die in Figur 4 der äußeren Schicht 5 entspricht, hat ein Flächengewicht von 13 bis 50 g/m², vorzugsweise 20 bis 40 g/m², insbesondere 40 g/m².

Die Gesamtdicke des Laminats I beträgt erfindungsgemäß 0,5 bis 0,8 mm, vorzugsweise 0,5 bis 0,7 mm, vorzugsweise 0,58 bis 0,63 mm, insbesondere 0,61 mm, die Gesamtdicke der Mehrschichtfolie III 50 bis 120 µm, vorzugsweise 80 bis 100 µm, beträgt.

Die Mehrschichtfolie III hat, wie in Figur 3 dargestellt, folgenden Aufbau:
- Innen- und Außenschichten 11 und 16 eines siegelfähigen Polyolefins, eines Copolymeren eines siegelfähigen Polyolefins oder Mischungen dieser Stoffe, insbesondere aus PE, vorzugsweise HDPE; der Anteil dieser Polyolefinschichten 11 und 16 liegt, bezogen auf die Gesamtdicke der Mehrschichtfolie III, zwischen 30 und 80 %, bevorzugt zwischen 50 und 75 %;
- mindestens eine Schicht 12 aus einem Polymer der Gruppe Polyester, Polyamid oder Polypropylen, vorzugsweise Polyamid. Der Anteil dieser Schicht(en) liegt, bezogen auf die Gesamtdicke der Mehrschichtfolie III, zwischen 8 und 25 %, bevorzugt zwischen 10 und 18 %. Diese Schicht ist für die Festigkeit der Mehrschichtfolie verantwortlich und sorgt auch für eine ausreichende Elastizität und Stabilität.
- mindestens eine polymere Barriere- bzw. Sperrschicht 14, bestehend aus EVOH, Polyamid oder Polyvinylidenchlorid, vorzugsweise EVOH, mit einem Anteil dieser Schicht, bezogen auf die Gesamtdicke der Mehrschichtfolie, zwischen 5 und 15%, vorzugsweise zwischen 8 und 12 %.
- auch als Klebeschichten wirksame Schichten 13 und 1 aus PE, HDPE oder LDPE.

Die eigentliche Sperr- und Barriereschicht 14, vorzugsweise aus EVOH, muss beidseitig lückenlos zwischen die Schichten 13 und 15 eingebettet sein, um die Wirkung der Barriereschicht für einen längeren Zeitraum zu erhalten.

Gemäß Figur 4 enthält die Kartonschicht II mehrere, vorzugsweise vier Kartonlagen 4, die vorzugsweise aus gebleichtem und/oder ungebleichtem Sulfatpapier bzw. Kraftpapier bestehen. Diese Kartonlagen 4 haben jeweils vorzugsweise ein Grammgewicht zwischen 80 bis 120 g/m², vorzugsweise 95 bis 105 g/m².

Zur Erhöhung der Festigkeit der Getränkedose ist gemäß einer bevorzugten Ausführungsform der Erfindung zwischen zwei Lagen 4 aus Karton eine Metallfolie, vorzugsweise eine Edelstahl- oder Aluminiumfolie, eingelegt bzw. eingeklebt, die vorzugsweise eine Dicke zwischen 1 bis 20 µm hat.

Die Schichten 6, 7 und 8 haben insbesondere die Funktionen von Klebeschichten und bestehen aus Polyolefinen, vorzugsweise PE, HDPE, LIDPE und dergleichen, mit einem Grammgewicht im Bereich von 13 bis 17 g/m², vorzugsweise 15 g/m².

Die Schicht 6 kann vorzugsweise auch aus Polyethylenterephthalat (PET) mit einem Grammgewicht von 13 bis 17 g/m², vorzugsweise 15 g/m², bestehen.

Die Schicht 8 kann vorzugsweise auch aus PA/PE mit einem Grammgewicht im Bereich von 18 bis 22 g/m², vorzugsweise 20 g/m², bestehen. Diese Schicht 8 kann auch eine Verbundschicht eine PA/PE-Surlynfolie sein mit einem Grammgewicht zwischen 18 und 27 g/m², vorzugsweise 25 g/m².

Die Herstellung der Mehrschichtfolie III erfolgt vorzugsweise durch Coextrusion im Blasverfahren, Coextrusion im Castverfahren oder durch klebstoffbasierte Kaschierung zweier oder mehrerer Einzellagen, welche vorzugsweise selbst wiederum coextrudiert sind.

Getränkedosen mit einem Füllvolumen von z.B. 3 bis 15 Liter oder mehr sind vorzugsweise aus mehrlagig gewickeltem Laminat I hergestellt.

Die Überlappungsbreite des Laminats im Bereich des Dosenmantels und damit die Breite des Klebestreifens liegt in vorteilhafter Weise im Bereich von 5 bis 25 mm, vorzugsweise im Bereich zwischen 10 bis 15 mm.

Um die äußeren Ränder der Kartonlagen 4 gegen das Eindringen von Feuchtigkeit zu schützen, ist das Laminat im Bereich der Randstreifen vorzugsweise beidseitig mit einer Dichtungsfolie, vorzugsweise Klebefolie auf der Basis von PE, insbesondere HDPE beschichtet bzw. umwickelt.

Die sich überlappenden Randstreifen des Laminats sind vorzugsweise durch Heißverklebung oder Ultraschallschweißen miteinander verbunden.

Vorzugsweise sind die Laminatränder mit einer insbesondere die Kartonlagen überdeckenden Siegelnaht versiegelt, die insbesondere aus PE, vorzugsweise HDPE, besteht.

## Patentansprüche

1. Getränkedose für unter Überdruck stehende, insbesondere Kohlensäure enthaltende Getränke mit einem durch Boden- und Deckelelemente verschlossenen Dosenmantel, der aus mindestens einem parallel gewickelten Laminat aus zellstoffhaltigem Material, vorzugsweise Karton, und einer im Bereich der Innenmantelfläche angeordnetem, Mehrschichtfolie besteht, die eine Barriere- bzw. Sperrschicht (14) enthält, **dadurch gekennzeichnet, dass** die Mehrschichtfolie (III) eine Gesamtdicke zwischen 50 µm und 120 µm, vorzugsweise zwischen 80 und 100 µm, hat, und dass der Dickenanteil der Schicht (14), bezogen auf die Gesamtdicke der Mehrschichtfolie (III) zwischen 5 % und 15 %, vorzugsweise zwischen 8 % und 12 %, liegt, und dass die Schicht (14) beidseitig ganzflächig zwischen Polyolefinschichten, vorzugsweise PE-Schichten, eingebettet ist.

2. Getränkedose nach Anspruch 1, **dadurch gekennzeichnet, dass** mindestens eine Metallfolie in den Dosenmantel integriert ist.

3. Getränkedose nach Anspruch 1 oder 2, **dadurch gekennzeichnet, dass** der Dosenmantel mehrere Lagen (4) aus Karton enthält, und dass eine Metallfolie zwischen zwei Lagen (4) eingelegt ist

4. Getränkedose nach Anspruch 2, **dadurch gekennzeichnet, dass** die Metallfolie eine Edelstahl- oder Aluminiumfolie mit einer Dicke zwischen 15 bis 20 µm ist.

5. Getränkedose nach einem der Ansprüche 1 bis 4, **dadurch gekennzeichnet, dass** die Schicht (14) aus einem Material besteht, das ausgewählt aus der Gruppe von EVOH, Polyamid oder Polyvinylidenchlorid, vorzugsweise aus EVOH mit einem Gewicht im Bereich von 15 bis 25 g/m², vorzugsweise 19 bis 21 g/m².

6. Getränkedose nach einem der Ansprüche 1 bis 5, **dadurch gekennzeichnet, dass** im Bereich des Dosenmantels die Überlappungsbreite des Laminats im Bereich von 5 bis 25 mm, vorzugsweise im Bereich von 10 bis 15 mm liegt, und dass das Laminat zumindest im Bereich der Überlappungs-Randstreifen vorzugsweise beidseitig mit einer Klebefolie, vorzugsweise auf der Basis von PE, insbesondere HDPE, beschichtet bzw. an der Außenseite damit umwickelt ist, und dass die sich überlappenden Randstreifen des Laminats vorzugsweise durch Heißverklebung oder Ultraschallschweißen miteinander verbunden sind.

7. Getränkedose nach einem der Ansprüche 1 bis 6, **dadurch gekennzeichnet, dass** die Mehrschichtfolie (III) an ihrer Innen- und Außenseite jeweils eine oder mehrere Schichten (11 bzw. 16) aus HDPE aufweist, und dass der Anteil dieser Schicht(en) (11 bzw. 16), bezogen auf die Gesamtdicke der Mehrschichtfolie (III), zwischen 30 % und 80 %, vorzugsweise zwischen 50 % und 75 %, liegt.

8. Getränkedose nach einem der Ansprüche 1 bis 7, **dadurch gekennzeichnet, dass** die Mehrschichtfolie (III) mindestens eine Schicht (12) aus einem Polymer aus der Gruppe Polyester, Polypropylen oder vorzugsweise PA enthält, und dass der Anteil dieser Schicht(en) (12), bezogen auf die Gesamtdicke der Folie, zwischen 8 % und 25 %, vorzugsweise zwischen 10 % und 18 %, liegt.

9. Getränkedose nach einem der Ansprüche 1 bis 8, **dadurch gekennzeichnet, dass** die Mehrschichtfolie in Richtung von der Innenwand zur Außenwand des Dosenmantels folgenden Aufbau hat:
- eine innere HDPE-Schicht (16);
- eine PE-Schicht (15);
- eine EVOH-Schicht (14);
- eine PE-Schicht (13);
- eine PA-Schicht (12) und
- eine äußere HDPE-Schicht (11).

10. Getränkedose nach einem der Ansprüche 1 bis 9, **dadurch gekennzeichnet, dass** die EVOH-Schicht (7) eingebettet ist zwischen einer PE-Schicht (15) mit einem Gewicht im Bereich von 12 - 18 g/m², vorzugsweise 14-16 g/m², und einer PA/PE-Surlyn-Schicht mit einem Gewicht zwischen 3-6 g/m².

11. Getränkedose nach einem der Ansprüche 1 bis 10 **dadurch gekennzeichnet, dass** der Dosenmantel mehrere Lagen (4) aus Karton, insbesondere gebleichtem und/oder ungebleichtem Sulfatkarton, mit einem Gesamtgewicht in der Größenordnung von 300 - 450 g/m², vorzugsweise 350 - 420 g/m², aufweist.

12. Getränkedose nach einem der Ansprüche 1 bis 11, **dadurch gekennzeichnet, dass** der Dosenmantel vier Kartonlagen jeweils mit einem Flächengewicht von 75 - 125 g/m² aufweist, und dass zwischen den Kartonlagen und zwischen den Kartonlagen und der Metallfolie (10) Klebeschichten auf der Basis von
| | Flächengewicht |
|---|---|
| - PA/PE | 19 - 21g/m², |
| oder | |
| - LIDPE | 14 - 16 g/m², |
| oder | |
| - PET | 13 - 17 g/m² |
| | |
| vorgesehen sind. | |

13. Getränkedose nach einem der Ansprüche 1 bis 12, **gekennzeichnet durch** eine auf die äußere Kartonlage des Dosenmantels aufkaschierte PE- oder LDPE-Beschichtung mit einem Flächengewicht von 13 - 50 g/m², vorzugsweise 20 - 40 g/m^{2,} insbesondere 40 g/m².

14. Getränkedose nach einem der Ansprüche 1 bis 13, **dadurch gekennzeichnet, dass** mindestens eine Kartonlage aus Kraft- bzw. Sulfatpapier besteht.

15. Getränkedose nach einem der Ansprüche 1 bis 14, **dadurch gekennzeichnet, dass** das aus Kartonlagen und der Mehrschichtfolie (III) bestehende Laminat mindestens zweilagig gewickelt ist.
